(19) Europäisches Patentamt
European Patent Office
Office européen des brevets

(11) **EP 3 699 793 B1**

(12) **FASCICULE DE BREVET EUROPEEN**

(45) Date de publication et mention
de la délivrance du brevet:
**25.12.2024 Bulletin 2024/52**

(21) Numéro de dépôt: **20157587.5**

(22) Date de dépôt: **17.02.2020**

(51) Classification Internationale des Brevets (IPC):
***G06F 21/44*** *(2013.01)*

(52) Classification Coopérative des Brevets (CPC):
**G06F 21/445**

(54) **PROCÉDÉ D'AUTHENTIFICATION**

AUTHENTIFIZIERUNGSVERFAHREN

AUTHENTICATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.02.2019 FR 1901849**

(43) Date de publication de la demande:
**26.08.2020 Bulletin 2020/35**

(73) Titulaire: **STMicroelectronics Belgium**
**1831 Diegem (BE)**

(72) Inventeur: **PEETERS, Michael**
**1320 TOURINNES-LA-GROSSE (BE)**

(74) Mandataire: **Cabinet Beaumont**
**4, Place Robert Schuman**
**B.P. 1529**
**38025 Grenoble Cedex 1 (FR)**

(56) Documents cités:
**EP-A1- 2 251 813          WO-A1-2010/112739**
**US-A1- 2015 163 211**

**Description**

Domaine technique

La présente description concerne de façon générale les dispositifs ou circuits électroniques. La présente description s'applique de façon plus particulière à un procédé d'authentification entre deux dispositifs ou circuits électroniques précédant, par exemple, un procédé de communication entre ces deux dispositifs ou circuits.

Technique antérieure

Une communication entre deux dispositifs, ou circuits, électroniques est souvent précédée d'une phase d'authentification. Pendant cette phase, un procédé d'authentification, mis en oeuvre par les deux dispositifs, permet de vérifier si les deux dispositifs sont autorisés à communiquer ensemble.

Les procédés d'authentification sont souvent utilisés lors de communication entre un dispositif de type terminal, comme par exemple un ordinateur, une imprimante, ou un terminal de paiement, et un équipement ou dispositif électronique de type périphérique, par exemple un consommable ou un accessoire. Le procédé d'authentification permet, dans ce cas, de valider l'accès du dispositif de type périphérique aux données et/ou à des fonctionnalités du dispositif de type terminal. Le procédé d'authentification est un premier moyen de protection contre les dispositifs malveillants essayant d'accéder à des données et/ou à des fonctionnalités d'autres dispositifs.

Un exemple usuel de procédé d'authentification utilisé, par exemple entre un ordinateur et un utilisateur, est l'utilisation d'un identifiant et d'un mot de passe.

Il serait souhaitable de pouvoir améliorer, au moins en partie, les procédés d'authentification connus de dispositifs électroniques.

Résumé de l'invention

Il existe un besoin pour des procédés d'authentification plus fiables.

Il existe plus particulièrement un besoin pour des procédés d'authentification de type Vérificateur/Candidat (de l'anglais Verifier/Prover) plus fiables.

Un mode de réalisation pallie tout ou partie des inconvénients des procédés d'authentification connus, et plus particulièrement tout ou partie des inconvénients des procédés connus d'authentification de type Vérificateur/Candidat (de l'anglais Verifier/Prover). La portée de l'invention est définie par les revendications indépendantes.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, de façon schématique, un schéma-bloc illustrant un exemple d'un procédé d'authentification ;
la figure 2 représente, de façon schématique, un schéma-bloc illustrant un mode de mise en oeuvre d'un procédé d'authentification ; et
la figure 3 représente, de façon schématique, un schéma-bloc illustrant un mode de mise en oeuvre d'un autre procédé d'authentification.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, ce procédé d'authentification peut s'adapter aux procédés de communication usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

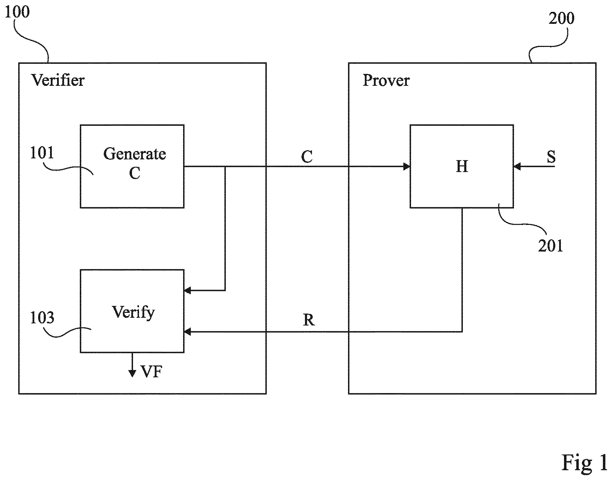

La figure 1 illustre, de façon schématique et sous forme de blocs, la mise en oeuvre d'un procédé d'authentification entre deux circuits 100 (Verifier) et 200 (Prover) .

Le circuit 100 fait, par exemple, partie d'un équipement, alors que le circuit 200 fait, par exemple, partie d'un consommable ou d'un accessoire. Le circuit 100 tient le rôle de circuit vérificateur auprès duquel le circuit 200, circuit candidat, s'authentifie.

Le procédé d'authentification de la figure 1 est un procédé d'authentification de type Vérificateur/Candidat (de l'anglais Verifier/Prover), dans lequel le circuit candidat 200 doit transmettre, au circuit vérificateur, une donnée secrète, par exemple un mot de passe, pour s'authentifier.

Le déroulement d'un exemple de ce procédé est le suivant.

Coté circuit 100, un bloc 101 (Generate C) illustre une première étape du procédé dans laquelle le circuit vérificateur 100 génère une donnée C. Une nouvelle donnée C est générée à chaque exécution du procédé d'authentification. Chaque donnée C est différente de celle du procédé d'authentification précédant. A titre d'exemple, la donnée C est générée par un compteur, ou par un système de génération de nombre aléatoire.

La donnée C est ensuite envoyée au circuit candidat 200.

Côté circuit 200, un bloc 201 (H) illustre une étape d'encodage de la donnée C à l'aide d'une donnée secrète S détenue par le circuit candidat 200. La donnée C est encodée à l'aide d'une fonction d'encodage H utilisant la donnée secrète S comme clé de chiffrement ou de signature. A titre d'exemple, la fonction H est une fonction de chiffrement, par exemple une permutation. Selon un autre exemple, la fonction H est une fonction de signature.

La donnée encodée, notée R, est ensuite envoyée au circuit vérificateur 100.

Un bloc 103 (Verify) du circuit 100 illustre une étape de vérification, par le circuit vérificateur 100, de la donnée encodée R reçue du circuit candidat. Pour cela, le circuit vérificateur utilise une fonction de vérification Verify. La fonction Verify prend, en entrée, la donnée C contenue dans le circuit 100, la donnée encodée R et fournit, en sortie, une information VF représentative du résultat de l'authentification, par exemple un drapeau comprenant un état Vrai et un état Faux. L'état Vrai signifie que l'authentification a fonctionné et l'état Faux signifie l'inverse. Selon un mode de réalisation, le circuit 100 connaît la donnée secrète S, et la fonction Verify prend en outre la donnée secrète S en entrée. A titre d'exemple, dans ce cas, la donnée secrète S est utilisée comme clé de chiffrement symétrique, la fonction Verify déchiffre la donnée R avec la donnée secrète S, puis vérifie si elle est conforme à la donnée attendue. Selon un autre exemple, la fonction Verify ne requiert pas le déchiffrement de la donnée encodée R.

Un inconvénient du procédé d'authentification décrit en relation avec la figure 1 est qu'une personne réussissant à analyser le fonctionnement du circuit vérificateur 100 pourrait créer un circuit candidat clone adapté à s'authentifier auprès du circuit vérificateur, par exemple en extrayant la donnée secrète S et/ou la fonction de chiffrement H.

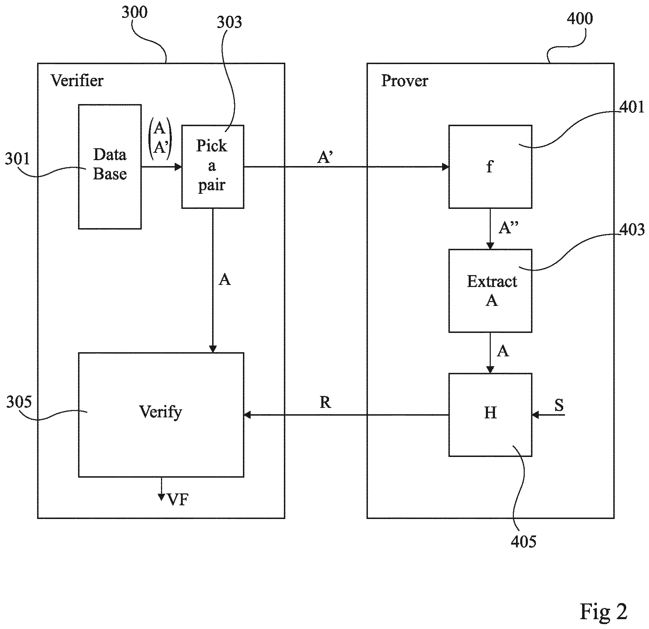

La figure 2 illustre, de façon schématique et sous forme de blocs, un mode de mise en oeuvre d'un procédé d'authentification entre deux circuits 300 (Verifier) et 400 (Prover). Le procédé d'authentification est un procédé d'authentification de type interrogation/réponse, ou question/réponse (de l'anglais challenge/response).

Le circuit 300 fait, par exemple, partie d'un équipement, alors que le circuit 400 fait, par exemple, partie d'un consommable ou d'un accessoire. Le circuit 300 tient le rôle de circuit vérificateur auprès duquel le circuit 400, circuit candidat, s'authentifie.

Le circuit vérificateur 300 comprend une table de correspondance, ou base de données, 301 comprenant plusieurs couples de données (A, A'). Chaque couple de données (A, A') respecte la formule suivante :

[Math 1]

$$f(A') = g(A; rand)$$

dans laquelle :

- f est une fonction de chiffrement secrète
- g est une fonction de combinaison ; et
- rand est une donnée aléatoire.

Selon un premier mode de réalisation, la fonction f est une fonction inversible. Dans ce cas, chaque couple de données (A, A') est composé d'une donnée A, générée de façon similaire à la donnée C décrite en relation avec la figure 1, et d'une donnée A' définie par la formule suivante :

[Math 2]

$$A' = f^{-1}(A'')$$

dans laquelle :

- f⁻¹ représente la fonction inverse de la fonction de chiffrement secrète f ; et
- A" représente le résultat de l'expression g(A, rand) .

Selon un deuxième mode de réalisation, la fonction f n'est pas une fonction inversible. Dans ce cas, chaque couple de données (A, A') est composé d'une donnée A', générée de façon similaire à la donnée C décrite en relation avec la figure 1, et d'une donnée A définie par la formule [Math 1] susmentionnée. Une fois l'image, par la fonction f, de la donnée A' calculée, une fonction inverse de la fonction de combinaison g est utilisée pour déterminer la donnée A. Le calcul de cette fonction inverse peut, par exemple, utiliser la donnée rand, ou une donnée dérivée de la donnée rand, comme, par exemple, sa longueur. A titre d'exemple, la fonction g est une fonction de concaténation, et la donnée A est obtenue en tronquant l'image f(A') de la donnée A' par la fonction f.

Les couples (A, A') sont générés par l'un ou l'autre des modes de réalisation décrits ci-dessus pendant une phase de personnalisation, par exemple réalisée par un circuit extérieur au circuit 300. Les couples (A, A') sont ensuite stockés dans la table de correspondance 301. Ainsi, pendant la phase de vie du circuit 300, le circuit 300 ne stocke que les données A et A'. Un avantage de cette caractéristique est que ni la fonction secrète f, ni, le cas échéant, sa fonction inverse f⁻¹ n'est connue du circuit vérificateur 300.

Le déroulement du mode de mise en oeuvre de ce procédé est le suivant.

Côté circuit 300, un bloc 303 (Pick a pair) illustre une étape de choix, dans la table de correspondance 301, d'un couple de données (A, A'). A titre d'exemple, le circuit vérificateur 300 choisit un couple de données de façon aléatoire.

La donnée A' du couple (A, A') est ensuite envoyée au circuit candidat 400.

Un bloc 401 (f) du circuit 400 illustre une étape d'obtention de la donnée A" à partir de la donnée A'. Pour cela, le circuit 400 utilise la fonction de chiffrement secrète f, que le circuit 300 ne connaît pas, pour obtenir la donnée A''.

Un bloc 403 (Extract A) illustre une étape d'extraction de la donnée A à partir de la donnée A''. Comme dit précédemment, la fonction g est une fonction permettant de combiner la donnée A avec la donnée aléatoire rand. Selon un mode de réalisation, la fonction g est une fonction de concaténation de la donnée A et de la donnée rand, et, dans ce cas, la fonction permettant l'extraction de A est une fonction de troncage permettant de supprimer la donnée rand.

Un bloc 405 (H) illustre une étape de chiffrement de la donnée secrète S détenue par le circuit candidat 400. La donnée secrète S est encodée à l'aide de la donnée A et d'une fonction d'encodage H similaire à celle décrite en relation avec la figure 1.

La donnée secrète encodée, notée R, est ensuite envoyée au circuit vérificateur 300.

Un bloc 305 (Verify) du circuit 300 illustre une étape de vérification, par le circuit vérificateur 300, de la donnée secrète encodée R reçue du circuit candidat. Pour cela, le circuit vérificateur utilise une fonction de vérification Verify du type de la fonction Verify décrite en relation avec la figure 1, fournissant la valeur binaire VF.

Un avantage de ce mode de réalisation est qu'une personne ayant accès aux données A' et R transmises entre les circuits 300 et 400, dans certains modes de réalisation, contenue dans le circuit 300, ne pourra pas avoir accès à la donnée secrète S sans connaître la fonction de chiffrement secrète f. Il n'est donc pas nécessaire de protéger le circuit 300 contre l'extraction de cette fonction secrète.

Un autre avantage de ce mode de réalisation est qu'une personne ayant accès aux données et aux fonctionnalités du circuit vérificateur 300 ne pourront pas générer de nouveaux couples (A, A') car la fonction secrète f n'est encodée que dans le circuit candidat 400.

Ainsi, les circuits 300 et 400 adaptés à mettre en oeuvre le procédé décrit en relation avec la figure 2 sont définis par les caractéristiques suivantes.

Le circuit 300 comprend une table de correspondance stockant les données A et A'. Le circuit 300 est en outre adapté à mettre en oeuvre la fonction Verify.

Le circuit 400 est adapté à mettre en oeuvre la fonction de chiffrement f et la fonction H, et à extraire la donnée A à partir de la donnée A''.

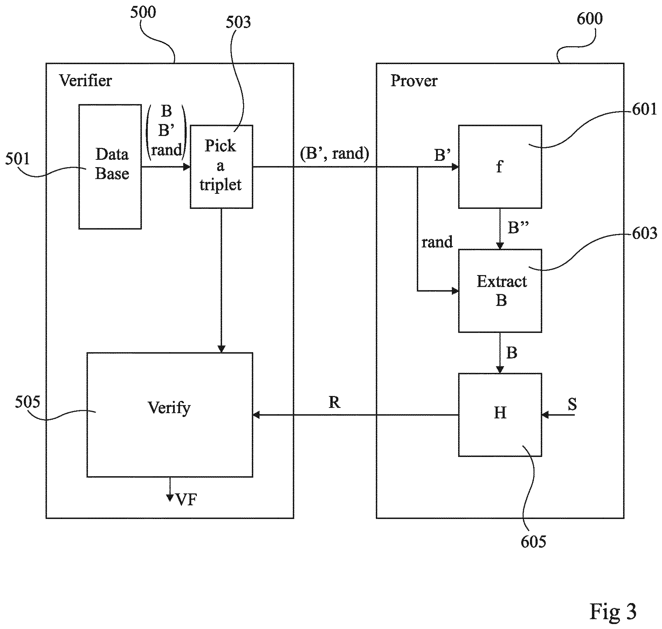

La figure 3 illustre, de façon schématique et sous forme de blocs, un mode de mise en oeuvre d'un procédé d'authentification entre deux circuits 500 (Verifier) et 600 (Prover). Le procédé d'authentification est un procédé d'authentification de type interrogation/réponse, ou question/réponse (de l'anglais challenge/response).

Le circuit 500 fait, par exemple, partie d'un équipement, alors que le circuit 600 fait, par exemple, partie d'un consommable ou d'un accessoire. Le circuit 500 tient le rôle de circuit vérificateur auprès duquel le circuit 600, circuit candidat, s'authentifie.

Le circuit vérificateur 500 comprend une table de correspondance, ou base de données, 501 comprenant plusieurs triplés de données (B, B', rand). Chaque triplé de données (B, B', rand) respecte la formule suivante :

[Math 3]

$$f(B') = g(B; rand)$$

dans laquelle :

- f est une fonction de chiffrement secrète et
- g est une fonction de combinaison.

Selon un premier mode de réalisation, la fonction f est une fonction inversible. Dans ce cas, chaque triplé de données (B, B', rand) est composé d'une donnée B, générée de façon similaire à la donnée C décrite en relation avec la figure 1, d'une donnée aléatoire rand et d'une donnée B' définie par la formule suivante :

[Math 4]

$$B' = f^{-1}(B'')$$

dans laquelle :

- $f^{-1}$ représente la fonction inverse d'une fonction de chiffrement secrète f ; et
- B'' représente le résultat de l'expression g(B ; rand).

Selon un deuxième mode de réalisation, la fonction f n'est pas une fonction inversible. Dans ce cas, chaque triplé de données (B, B', rand) est composé d'une donnée B', générée de façon similaire à la donnée C décrite en relation avec la figure 1, d'une donnée rand générée aléatoirement, et d'une donnée B définie par la formule [Math 3] susmentionnée. Une fois l'image, par la fonction f, de la donnée B' calculée, une fonction inverse de la fonction de combinaison g est utilisée pour déterminer, à partir de la donnée rand, la donnée A. Le calcul de cette fonction inverse peut, par exemple, utiliser la donnée rand, ou une donnée dérivée de la donnée rand.

A titre d'exemple, quand les données sont des mots binaires, la fonction g est une fonction de combinaison logique de type OU exclusif (XOR) définie par la formule suivante :

[Math 5]

$$g(a; b) = a \oplus b$$

dans laquelle :

- a et b sont des mots binaires ; et
- le symbole $\oplus$ symbolise la fonction OU exclusif.

Les triplés de données (B, B', rand) sont générés par l'un ou l'autre des modes de réalisation décrits ci-dessus pendant une phase de personnalisation, par exemple effectuée, par un circuit extérieur au circuit 600. Les triplés de données (B, B', rand) sont, ensuite, stockés dans la table de correspondance 501. Ainsi, pendant la phase de vie du circuit 500, le circuit 500 ne stocke que les données B, B' et rand. Un avantage de cette caractéristique est que ni la fonction secrète f, ni, le cas échéant, sa fonction inverse $f^{-1}$ n'est connue du circuit vérificateur 500.

Le déroulement du mode de mise en oeuvre de ce procédé est le suivant.

Un bloc 503 (Pick a triplet) illustre une étape de choix, dans la table de correspondance 501, d'un triplé de données (B, B', rand). A titre d'exemple, le circuit vérificateur 500 choisit un triplé de données de façon aléatoire.

Les données B' et rand du triplé (B, B', rand) sont ensuite envoyées au circuit candidat 600.

Un bloc 601 (f) illustre une étape d'obtention de la donnée B'' à partir de la donnée B'. Le circuit 600 utilise la fonction de chiffrement secrète f pour obtenir la donnée B''.

Un bloc 603 (Extract B) illustre une étape d'extraction de la donnée B à partir de la donnée B''. Cette étape peut requérir l'utilisation de la donnée aléatoire rand. Comme dit précédemment, la fonction g est une fonction permettant de combiner la donnée B avec la donnée aléatoire rand. Selon un mode de réalisation où les données sont des mots binaires, la fonction g est une fonction logique de type OU exclusif. Dans ce cas l'extraction de la donnée B consiste en l'application une nouvelle fois de la fonction g, définie par la formule suivante :

[Math 6]

$$B = g(g(B; rand); rand) = B \oplus rand \oplus rand$$

Un bloc 605 (H) illustre une étape de chiffrement de la donnée secrète S détenue par le circuit candidat 600. La donnée secrète S est encodée à l'aide de la donnée B et d'une fonction d'encodage H similaire à celle décrite en relation avec la figure 1.

La donnée secrète encodée, notée R, est ensuite envoyée au circuit vérificateur 500.

Un bloc 505 (Verify) illustre une étape de vérification, par le circuit vérificateur 500, de la donnée secrète encodée R reçue du circuit candidat. Pour cela, le circuit vérificateur utilise une fonction de vérification Verify de type de la fonction Verify décrite en relation avec les figures 1 et 2. Ainsi, la fonction Verify prend, en entrée, la donnée B et la donnée secrète encodée R, et fournit, en sortie, une information binaire VF.

Les avantages de ce mode de réalisation sont les mêmes que les avantages du mode de réalisation décrit en relation avec la figure 2.

Ainsi, les circuits 500 et 600 adaptés à mettre en oeuvre le procédé décrit en relation avec la figure 2 sont définis par les caractéristiques suivantes.

Le circuit 500 comprend une table de correspondance stockant les données B, B' et rand. Le circuit 500 est en outre adapté à mettre en oeuvre la fonction Verify.

Le circuit 600 est adapté à mettre en oeuvre la fonction de chiffrement f et la fonction H, et à extraire la donnée B à partir de la donnée B' ' et, par exemple, de la donnée aléatoire rand.

Un avantage des procédés d'authentification décrits en relation avec les figures 2 et 3 est qu'ils peuvent être utilisés en complément d'un procédé d'authentification classique, par exemple du type de celui décrit en relation avec la figure 1.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art.

De plus, un circuit candidat du type des circuits 400 et 600 comprenant une table de correspondance comprenant toutes les données R correspondantes aux données A' ou B' envoyées par un circuit vérificateur du type des circuits 300 et 500, est un mode de réalisation.

Enfin, la mise en oeuvre pratique des modes de réalisation et variantes décrits est à la portée de l'homme du métier à partir des indications fonctionnelles données ci-dessus.

**Revendications**

**1.** Procédé d'authentification d'un premier circuit (400, 600) par un deuxième circuit (300, 500), le deuxième circuit (300, 500) stockant au moins une première donnée (A, B) et au moins une deuxième donnée (A', B'), une image de la deuxième donnée (A", B") par une première fonction (f) étant égale à la combinaison de la première donnée (A, B) et d'une troisième donnée (rand), comprenant les étapes successives suivantes :

- le deuxième circuit (300, 500) envoie, au premier circuit (400, 600), au moins ladite deuxième donnée (A', B') ;
- le premier circuit (400, 600) obtient ladite image de la deuxième donnée (A", B") à partir de ladite deuxième donnée (A', B') avec la première fonction (f) ; T
- le premier circuit (400, 600) extrait ladite première donnée (A, B) à partir de ladite image de la deuxième donnée (A', B') avec ladite troisième donnée (rand); et
- le premier circuit (400, 600) envoie une quatrième donnée (R) représentative de la première donnée (A, B) au deuxième circuit (300, 500) pour authentification, la quatrième donnée (R) correspondant à la première donnée (A, B) encodée par une deuxième fonction (H) différente de la première fonction (f).

**2.** Procédé d'authentification, mis en oeuvre par un premier circuit (400, 600) adapté à mettre en oeuvre une première fonction (f), comprenant les étapes successives suivantes :

- recevoir au moins une deuxième donnée (A', B') d'un deuxième circuit (300, 500) stockant au moins une première donnée (A, B) et au moins une deuxième donnée (A', B'), une limage de la deuxième donnée (A", B") la par la première fonction (f) étant égale à la combinaison de la première donnée (A, B) et d'une troisième donnée (rand) ;

- obtenir ladite image de la deuxième donnée (A", B") à partir de ladite deuxième donnée (A', B') avec la première fonction (f) ;

- le premier circuit (400, 600) extrait ladite première donnée (A, B) à partir de ladite image de la deuxième donnée (A', B') avec ladite troisième donnée (rand); et

- envoyer une quatrième donnée (R) représentative de la première donnée (A, B) au deuxième circuit (300, 500) pour authentification, la quatrième donnée (R) correspondant à la première donnée (A, B) encodée par une deuxième fonction (H) différente de la première fonction (f) .

3. Procédé d'authentification, mis en oeuvre par un deuxième circuit (300, 500) stockant au moins une première donnée (A, B) et au moins une deuxième donnée (A', B'), une image de la deuxième donnée (A", B") par une première fonction (f) étant égale à la combinaison de la première donnée (A, B) et d'une troisième donnée (rand), comprenant les étapes successives suivantes :

- envoyer au moins ladite deuxième donnée (A', B') à un premier circuit (400, 600) adapté à mettre en oeuvre la première fonction (f) afin d'obtenir ladite image de la deuxième donnée (A", B") à partir de ladite deuxième donnée (A', B') et extraire ladite première donnée (A, B) à partir de ladite image de la deuxième donnée (A', B') avec ladite troisième donnée (rand);

- recevoir une quatrième donnée (R) représentative de la première donnée (A) du premier circuit (400, 600) pour authentification, la quatrième donnée (R) correspondant à la première donnée (A, B) encodée par une deuxième fonction (H) différente de la première fonction (f) .

4. Procédé selon l'une quelconque des revendications 1 à 3, dans lequel le deuxième circuit (300, 500) vérifie la correspondance entre la quatrième donnée (R) et la première donnée (A, B).

5. Procédé selon l'une quelconque des revendications 1 à 4, dans lequel la deuxième fonction (H) est une fonction de signature.

6. Procédé selon l'une quelconque des revendications 1 à 4, dans lequel la deuxième fonction (H) est une fonction de chiffrement.

7. Procédé selon la revendication 5 ou 6, dans lequel la première donnée (A, B) est encodée par la deuxième fonction (H) .

8. Procédé selon l'une quelconque des revendications 1 à 7, dans lequel la première fonction (f) n'est connue que du premier circuit (400, 600).

9. Procédé selon l'une quelconque des revendications 1 à 8, dans lequel la première fonction (f) est inversible.

10. Procédé selon l'une quelconque des revendications 1 à 8, dans lequel la première fonction (f) n'est pas inversible.

11. Procédé selon la revendication 9 ou 10, dans lequel la combinaison (g) de la première donnée (A, B) et de la troisième donnée (rand) est une concaténation.

12. Procédé selon la revendication 9 ou 10, dans lequel la combinaison (g) de la première donnée (A, B) et de la troisième donnée (rand) est une fonction OU exclusif.

13. Procédé selon l'une quelconque des revendications 1 à 12, dans lequel les première et deuxième données (A, B ; A', B') sont stockées dans une table de correspondance.

14. Procédé selon la revendication 13, dans lequel la troisième donnée (rand) est, en outre, stockée dans la table de correspondance.

15. Un deuxième circuit (300, 500) mettant en oeuvre le procédé selon l'une quelconque des revendications 3 à 14.

16. Un premier circuit (400, 600) mettant en oeuvre le procédé selon la revendication 2 ou l'une quelconque des revendications 4 à 14.

**17.** Le deuxième circuit (300, 500) selon la revendication 15, comprenant une table de correspondance (301, 501) dans laquelle sont stockées :

- au moins la deuxième donnée (A', B') et la première donnée (A, B) ; et
- au moins la quatrième donnée (R)

**Patentansprüche**

**1.** Verfahren zur Authentifizierung einer ersten Schaltung (400, 600) durch eine zweite Schaltung (300, 500), wobei die zweite Schaltung (300, 500) mindestens einen ersten Datensatz (A, B) und mindestens einen zweiten Datensatz (A', B') speichert, wobei ein Abbild des zweiten Datensatzes (A'', B'') durch eine erste Funktion (f) gleich der Kombination des ersten Datensatzes (A, B) und eines dritten Datensatzes (rand) ist, wobei das Verfahren die folgenden aufeinanderfolgenden Schritte aufweist:

- die zweite Schaltung (300, 500) sendet, und zwar an die erste Schaltung (400, 600), mindestens den zweiten Datensatz (A', B') ;
- die erste Schaltung (400, 600) erhält das Bild des zweiten Datensatzes (A'', B'') aus dem zweiten Datensatz (A', B') mit der ersten Funktion (f);
- die erste Schaltung (400, 600) extrahiert den ersten Datensatz (A, B) aus dem Bild des zweiten Datensatzes (A', B') mit dem dritten Datensatz (Rand); und
- der erste Schaltkreis (400, 600) sendet einen vierten Datensatz (R), die für den ersten Datensatz (A, B) repräsentativ sind, zur Authentifizierung an den zweiten Schaltkreis (300, 500), wobei der vierte Datensatz (R) dem ersten Datensatz (A, B) entspricht, der durch eine zweite Funktion (H) kodiert ist, die sich von der ersten Funktion (f) unterscheidet.

**2.** Verfahren zur Authentifizierung, das von einer ersten Schaltung (400, 600) ausgeführt wird, die eine erste Funktion (f) ausführen kann, die folgenden aufeinanderfolgenden Schritte aufweisend:

- Empfangen von mindestens einem zweiten Datensatz (A', B') von einer zweiten Schaltung (300, 500), die mindestens einen ersten Datensatz (A, B) und mindestens einen zweiten Datensatz (A', B') speichert, wobei ein Abbild des zweiten Datensatzes (A'', B'') durch die erste Funktion (f) gleich der Kombination des ersten Datensatzes (A, B) und eines dritten Datensatzes (rand) ist;
- Erhalten des Bildes des zweiten Datensatzes (A'', B'') aus dem zweiten Datensatz (A', B') mit der ersten Funktion (f);
- wobei die erste Schaltung (400, 600) den ersten Datensatz (A, B) aus dem Bild des zweiten Datensatzes (A', B') mit dem dritten Datensatz (Rand) extrahiert; und
- Senden eines vierten Datensatzes (R), der für den ersten Datensatz (A, B) repräsentativ ist, an die zweite Schaltung (300, 500) zur Authentifizierung, wobei der vierte Datensatz (R) dem ersten Datensatz (A, B) entspricht, der durch eine zweite Funktion (H) kodiert ist, die sich von der ersten Funktion (f) unterscheidet.

**3.** Verfahren zur Authentifizierung, das von einer zweiten Schaltung (300, 500) ausgeführt wird, die mindestens einen ersten Datensatz (A, B) und mindestens einen zweiten Datensatz (A', B') speichert, wobei ein Abbild des zweiten Datensatzes (A'', B'') durch eine erste Funktion (f), die gleich der Kombination des ersten Datensatzes (A, B) und eines dritten Datensatzes (rand) ist, die folgenden aufeinanderfolgenden Schritten aufweisend:

- Senden mindestens des zweiten Datensatzes (A', B') an eine erste Schaltung (400, 600), die geeignet ist, die erste Funktion (f) auszuführen, um das Bild des zweiten Datensatzes (A'', B'') ausgehend von dem zweiten Datensatz (A', B') zu erhalten, und Extrahieren des ersten Datensatzes (A, B) aus dem Bild des zweiten Datensatzes (A', B') mit den dritten Datensatz (rand);
- Empfangen von einem vierten Datensatz (R), der für den ersten Datensatz (A) repräsentativ ist, von der ersten Schaltung (400, 600) zur Authentifizierung, wobei der vierte Datensatz (R) dem ersten Datensatz (A, B) entspricht, der durch eine zweite Funktion (H) kodiert ist, der sich von der ersten Funktion (f) unterscheidet.

**4.** Verfahren nach einem der Ansprüche 1 bis 3, wobei die zweite Schaltung (300, 500) die Übereinstimmung zwischen dem vierten Datensatz (R) und dem ersten Datensatz (A, B) überprüft.

**5.** Verfahren nach einem der Ansprüche 1 bis 4, wobei die zweite Funktion (H) eine Signaturfunktion ist.

**6.** Verfahren nach einem der Ansprüche 1 bis 4, wobei die zweite Funktion (H) eine Verschlüsselungsfunktion ist.

**7.** Verfahren nach Anspruch 5 oder 6, wobei der erste Datensatz (A, B) durch die zweite Funktion (H) kodiert wird.

**8.** Verfahren nach einem der Ansprüche 1 bis 7, wobei die erste Funktion (f) nur der ersten Schaltung (400, 600) bekannt ist.

**9.** Verfahren nach einem der Ansprüche 1 bis 8, wobei die erste Funktion (f) invertierbar ist.

**10.** Verfahren nach einem der Ansprüche 1 bis 8, wobei die erste Funktion (f) nicht invertierbar ist.

**11.** Verfahren nach Anspruch 9 oder 10, wobei die Kombination (g) aus dem ersten Datensatz (A, B) und dem dritten Datensatz (rand) eine Verkettung ist.

**12.** Verfahren nach Anspruch 9 oder 10, wobei die Kombination (g) des ersten Datensatzes (A, B) und des dritten Datensatzes (rand) eine exklusive ODER-Funktion ist.

**13.** Verfahren nach einem der Ansprüche 1 bis 12, wobei der erste und der zweite Datensatz (A, B; A', B') in einer Nachschlagetabelle gespeichert werden.

**14.** Verfahren nach Anspruch 13, wobei der dritte Datensatz (rand) weiterhin in der Nachschlagetabelle gespeichert werden.

**15.** Eine zweite Schaltung (300, 500), die das Verfahren nach einem der Ansprüche 3 bis 14 durchführt.

**16.** Eine erste Schaltung (400, 600), die das Verfahren nach Anspruch 2 oder einem der Ansprüche 4 bis 14 durchführt.

**17.** Die zweite Schaltung (300, 500) nach Anspruch 15, mit einer Nachschlagetabelle (301, 501), in der Folgendes gespeichert ist:

- mindestens der zweite Datensatz (A', B') und der erste Datensatz (A, B); und
- mindestens der vierte Datensatz (R).


**Claims**

**1.** Method for authenticating a first circuit (400, 600) by a second circuit (300, 500), the second circuit (300, 500) storing at least one first data (A, B) and at least one second data (A', B'), an image of the second data (A", B") by a first function (f) being equal to the combination of the first data (A, B) and a third data (rand), comprising the following successive steps:

- the second circuit (300, 500) sends, to the first circuit (400, 600), at least said second data (A', B');
- the first circuit (400, 600) obtains said image of the second data (A", B") from said second data (A', B') with the first function (f);
- the first circuit (400, 600) extracts said first data (A, B) from said image of the second data (A', B') with said third data (rand); and
- the first circuit (400, 600) sends a fourth data (R) representative of the first data (A, B) to the second circuit (300, 500) for authentication, the fourth data (R) corresponding to the first data (A, B) encoded by a second function (H) different from the first function (f).

**2.** Authentication method, implemented by a first circuit (400, 600) adapted to implement a first function (f), comprising the following successive steps:

- receiving at least one second data (A', B') from a second circuit (300, 500) storing at least one first data (A, B) and at least one second data (A', B'), an image of the second data (A", B") by the first function (f) being equal to the combination of the first data (A, B) and a third data (rand);

- obtaining said image of the second data (A", B") from said second data (A', B') with the first function (f);
- the first circuit (400, 600) extracts said first data (A, B) from said image of the second data (A', B') with said third data (rand); and
- sending a fourth data (R) representative of the first data (A, B) to the second circuit (300, 500) for authentication, the fourth data (R) corresponding to the first data (A, B) encoded by a second function (H) different from the first function (f).

3. Authentication method, implemented by a second circuit (300, 500) storing at least one first data (A, B) and at least one second data (A', B'), an image of the second data (A", B") by a first function (f) being equal to the combination of the first data (A, B) and a third data (rand), comprising the following successive steps:

- sending at least said second data (A', B') to a first circuit (400, 600) adapted to implement the first function (f) in order to obtain said image of the second data (A", B") from said second data (A', B'), and extracting said first data (A, B) from said image of the second data (A', B') with said third data (rand) ;
- receiving a fourth data (R) representative of the first data (A) from the first circuit (400, 600) for authentication, the fourth data (R) corresponding to the first data (A, B) encoded by a second function (H) different from the first function (f).

4. Method according to any one of claims 1 to 3, wherein the second circuit (300, 500) checks the correspondence between the fourth data (R) and the first data (A, B).

5. Method according to any one of claims 1 to 4, wherein the second function (H) is a signature function.

6. Method according to any one of claims 1 to 4, wherein the second function (H) is an encryption function.

7. Method according to claim 5 or 6, wherein the first data (A, B) is encoded by the second function (H).

8. Method according to any one of claims 1 to 7, wherein the first function (f) is known only to the first circuit (400, 600).

9. Method according to any one of claims 1 to 8, wherein the first function (f) is invertible.

10. Method according to any one of claims 1 to 8, wherein the first function (f) is not invertible.

11. Method according to claim 9 or 10, wherein the combination (g) of the first data (A, B) and the third data (rand) is a concatenation.

12. Method according to claim 9 or 10, wherein the combination (g) of the first data (A, B) and the third data (rand) is an exclusive OR function.

13. Method according to any one of claims 1 to 12, wherein the first and second data (A, B; A', B') are stored in a lookup table.

14. Method according to claim 13, wherein the third data (rand) is further stored in the lookup table.

15. Second circuit (300, 500) implementing the method according to any one of claims 3 to 14.

16. First circuit (400, 600) implementing the method according to claim 2 or any one of claims 4 to 14.

17. Second circuit (300, 500) according to claim 15, comprising a look-up table (301, 501) wherein are stored:

- at least the second data (A', B') and the first data (A, B) ; and
- at least the fourth data (R).

Fig 1

Fig 2

Fig 3